Europäisches Patentamt

European Patent Office

Office européen des brevets

(11) Publication number: **0 023 815**
**A2**

## EUROPEAN PATENT APPLICATION

(21) Application number: 80302591.5

(51) Int. Cl.³: **B 23 P 15/40**

(22) Date of filing: 30.07.80

(30) Priority: 31.07.79 GB 7926663

(43) Date of publication of application: 11.02.81
Bulletin 81/6

(84) Designated Contracting States: DE FR GB IT

(71) Applicant: **Squire, Harold Frederick, 37 Monsell Road, Finsbury Park London N4 2EG (GB)**

(72) Inventor: **Squire, Harold Frederick, 37 Monsell Road, Finsbury Park London N4 2EG (GB)**

(74) Representative: **Kirby, Harold Douglas Benson, G.F. Redfern & Company Marlborough Lodge 14 Farncombe Road, Worthing West Sussex BN11 2BT (GB)**

(54) Apparatus and methods for use in creasing cardboard and like materials.

(57) A female creasing die strip D is provided with two channels G for cooperation with two creasing rules A. To affix die D to platen F, a location device E is provided on die D and has means H for frictional engagement with at least one of rules A at a position in which rules A are accurately aligned with channels G. Adhesive on die strip D causes adhesion of die strip D to platen F whereafter device E pulls free from rules A. Device E is then removed from die strip D before creasing operation begins.

APPARATUS AND METHODS FOR USE IN
CREASING CARDBOARD AND LIKE MATERIALS

The present invention relates to a female creasing die comprising a strip member provided with adhesive on one side and a channel on its other side. The invention also relates to apparatus for creasing including such a creasing die.

Creasing of cardboard, paperboard and like materials for manufacturing cartons or boxes is normally achieved by the use of a press having a platen on which is provided a channel creasing matrix forming a so-called makeready as shown, for example, in U.K. Patent No. 807,251. The channel creasing matrix on the platen defines a number of channels which cooperate with so-called creasing rules provided on the movable plate of the press, which creasing rules are arranged to descend into the channels, thus creasing any cardboard or paperboard which is positioned on the platen along lines defined by the position of the channels. It is clearly important to ensure that the matrix of channels on the platen is accurately aligned with the position of the creasing rules on the descending plate. This is best achieved in a preliminary makeready producing operation in which the channel creasing matrix is engaged with the creasing rules and is provided with an adhesive on its lower surface. The press is then put on impression, and after completing one cycle the channel matrix adheres to the platen and pulls free from the creasing rules. In order that the creasing matrix may be attached to the creasing rules to allow this cycle of operations to take place, the upper surface of the channel matrix is provided with a locator strip having a groove which fit over the creasing rules. This locator strip can be easily pulled free of the channel matrix after the channel matrix is secured to the platen. Conventionally, the locator strip is provided with a groove defined by two upstanding walls which embrace the creasing rule therebetween and are so held thereon by friction. This arrangement, however, does not readily lend itself to the production of a creasing matrix suitable for placing two creasing channels very close together such as would be required for the production of a record sleeve. In this case, since the creasing rules must also be positioned very close together, there is insufficient room between the two adjacent creasing rules to position two locator strips of the conventional type.

According to one aspect of the invention, there is provided a female creasing die comprising a strip member provided with adhesive on one side and a channel on its other side characterised in that a further channel is provided on said other side parallel to the other channel and in that a single removable locator member is positioned on said other side and is provided with engagement means arranged for frictional engagement with at least one of two creasing rules spaced for mating with respective ones of said channels.

Preferably, said engagement means comprises an upstanding rib arranged for frictional engagement with at least one of said creasing rules.

Preferably, said rib is parallel to and central of said channels and is dimensioned for a friction fit between said creasing rules.

Preferably, said locator member is provided with two side portions extending from said rib.

In one embodiment, said side portions are arranged resiliently to grip edges of said strip member.

In another embodiment, said locator member is bonded to said strip.

Said locator member may be attached to said strip by a thermal bond.

The distance between the centre lines may be less than 7 mm.

Preferably, said strip comprises three upstanding members of synthetic plastics material mounted on a common metal blocking plate and defining said channels therebetween.

According to a further aspect of the invention, there is provided apparatus for creasing comprising: a platen; at least one female creasing die mounted on the platen and providing a creasing channel; and a movable press member having at least one creasing rule positioned for mating with a respective creasing channel characterised in that; said die is in accordance with the above-defined female creasing die, and in that the movable press member has two creasing rules positioned for mating with respective channels.

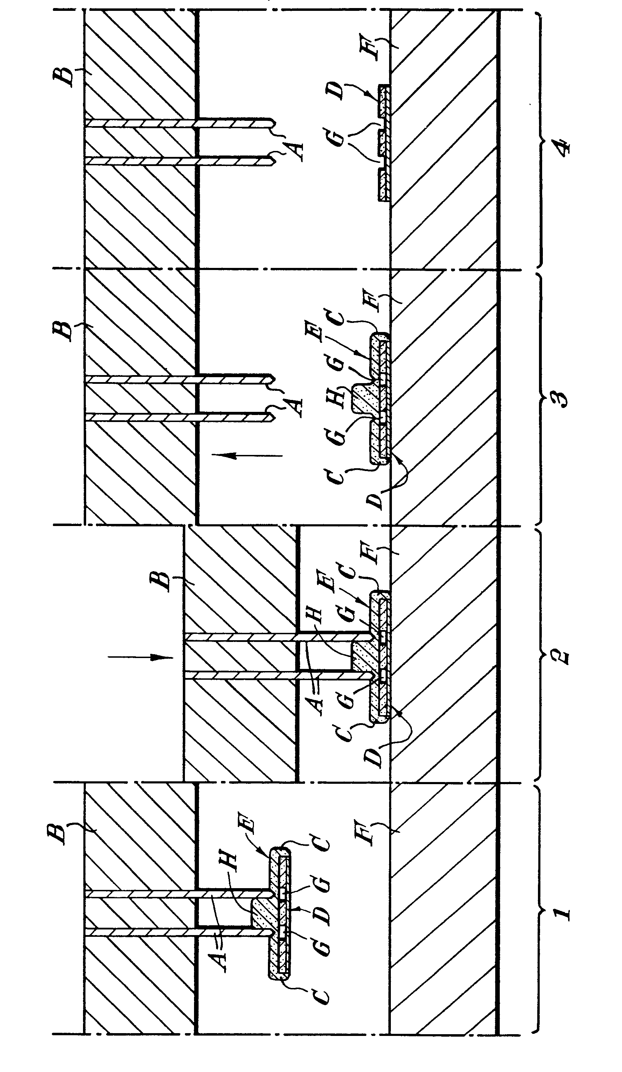

For a better understanding of the invention, and to show how the same may be carried into effect, reference will now be made, by way of example, to the accompanying drawing, the single figure of which shows four steps in the application of a female creasing die to a platen.

Referring to the figure in more detail, portions 1 to 4 of the figure illustrate four sequential steps in the application of a female creasing die to a platen F. All four portions of the figure illustrate the application process in cross-section, it being understood that the female creasing die is in fact an elongate strip member D having two elongate channels G on the upper surface thereof. On the under surface of the strip D an adhesive is provided for securing the strip D to the platen F. In the upper part of each portion of the figure, is illustrated a movable press member B provided with two parallel and closely spaced creasing rules A. It will be seen that the creasing rules A are positioned to cooperate with respective ones of the channels G provided in the female die strip D. On the upper surface of the die strip D, is provided a locator member E. This member E has a central upstanding rib H

0023815

and two side portions C which engage around the edges of the die strip D. This peripheral engagement of edges C with the die strip D maintains the member E and the die strip D in removable engagement. It will be observed that upstanding rib H is dimensioned to engage by friction fit between the two creasing rules A so that the combination of die strip D and locator member E can be suspended from the creasing rules A by means of this friction fit.

The method of securing the die strip D to the platen F is as follows. First referring to portion 1 of the figure, the die strip and locator member combination is positioned on the creasing rules A, the rib H engaging by friction fit between the creasing rules A. As shown in portion 2 of the figure, the movable press member B is lowered towards the platen F thus bringing the surface of die strip D into contact with the platen F, where it is secured by means of the adhesive. As shown in portion 3 of the Figure, the movable press member B is then raised away from the die strip D leaving the die strip D and the locator member E in a position on the platen F. The locator member E may then be stripped away from the die strip D leaving the arrangement as shown in portion 4 of the figure with the die strip D in readiness for cooperation with the creasing rules A to produce two closely spaced and parallel creases in a piece of cardboard or paperboard or the like.

0023815

It will be apparent that, within the scope of the invention, various methods may be utilised for securing the locator member E to the die strip D. The side portions C of the member E are not essential, it being possible to secure the rib H to the die strip D by, for example, a thermal bond. The preferred method, however, is as illustrated where the side portions E resiliently grip the edges of the die strip D and positively locate the rib H in the correct position.

Locator strip E is preferably made of a synthetic plastics material.

By use of the described apparatus and method, it is possible to crease cardboard or paperboard with two parallel and closely spaced creases without any great expense or difficulty. The method and apparatus may be applied to the production of, for example, record sleeves where the spine of the record sleeve requires two closely spaced parallel creases for its production.

The female die strip D is preferably formed of three upstanding members of synthetic plastics material (between which channels G are defined) mounted on a thin metal backing plate on which the adhesive layer is provided. The plastics members can be manufactured by an extrusion process.

The distance between the centre lines of channels G may be less than 7 mm, for example between 3 mm and 5 mm. It is envisaged that double channel die strips of three standard gauges will be produced, having respectively 3 mm, 4 mm and 5 mm centre line spacing.

Although it is preferred, as illustrated, that the locator member E has a single upstanding rib H for frictional engagement between creasing rules A, this is not essential. Within the scope of the invention, alternative forms of frictional engagement are possible. For example, member E may have a single narrow upstanding rib in which is provided an elongate groove for receiving one of the creasing rules A. Alternatively, the member E may have no upstanding member but have instead two elongate grooves in its surface spaced for receiving respective creasing rules A for frictional engagement therewith. A further alternative is for the member E to provide two lateral upstanding members for frictional engagement with the outer surfaces of respective creasing rules A with no engagement between rules A.

The illustrated embodiment is however the simplest and most reliable from a manufacturing stand point.

By use of the illustrated creasing apparatus, two creases having a centre to centre spacing of a little as 3 mm can be formed in cardboard or paperboard or the like. This has hitherto not been possible with apparatus of this type. Significant production advantages may be achieved in the manufacture of articles such as record sleeves or other articles having two creases very close together, as in the spine of folders and small booklet covers.

0023815

CLAIMS:-

1. A female creasing die comprising a strip member (D) provided with adhesive on one side and a channel (G) on its other side characterised in that a further channel (G) is provided on said other side parallel to the other channel (G) and in that a single removable locator member (E) is positioned on said other side and is provided with engagement means (H) arranged for frictional engagement with at least one of two creasing rules (A) spaced for mating with respective ones of said channels (G).

2. A die according to claim 1 characterised in that said engagement means comprises an upstanding rib (H) arranged for frictional engagement with at least one of said creasing rules (A).

3. A die according to claim 2 characterised in that said rib (H) is parallel to and central of said channels (G) and is dimensioned for a friction fit between said creasing rules (A).

4. A die according to claim 2 or 3 characterised in that said locator member (E) is provided with two side portions (C) extending from said rib (H).

5. A die according to claim 4 characterised in that said side portions (C) are arranged resiliently to grip edges of said strip member (D).

6. A die according to any one of claims 1 to 4 characterised in that said locator member (E) is bonded to said strip (D).

7. A die according to claim 6 characterised in that said locator member (E) is attached to said strip (D) by a thermal bond.

8. A die according to any one of the preceding claims characterised in that the distance between the centre lines of said channels (G) is less than 7 mm.

9. A die according to any one of the preceding claims characterised in that said strip (D) comprises three upstanding members of synthetic plastics material mounted on a common metal backing place and defining said channels (G) therebetween.

10. Apparatus for creasing comprising: a platen (F) at least one female creasing die mounted on the platen and providing a creasing channel; and a movable press member (B) having at least one creasing rule (A) positioned for mating with a creasing channel (G) characterised in that: said die is in accordance with any one of claims 1 to 9, and in that the
movable press member (B) has two creasing rules (A)
positioned for mating with respective channels (G).